Europäisches Patentamt

European Patent Office

Office européen des brevets

(11) Veröffentlichungsnummer: **0 396 887**
**A1**

## (12) EUROPÄISCHE PATENTANMELDUNG

(21) Anmeldenummer: 90105521.0

(22) Anmeldetag: 23.03.90

(51) Int. Cl.5: **C22B 3/16, B09B 5/00**

(30) Priorität: 20.04.89 DE 3912932

(43) Veröffentlichungstag der Anmeldung:
14.11.90 Patentblatt 90/46

(84) Benannte Vertragsstaaten:
AT BE CH FR GB LI NL

(71) Anmelder: Dumont, Eugen, Dr.
Am Bienenstock 8
D-6000 Frankfurt am Main 60(DE)

(72) Erfinder: Dumont, Eugen, Dr.
Am Bienenstock 8
D-6000 Frankfurt am Main 60(DE)

(74) Vertreter: Schubert, Siegmar, Dipl.-Ing. et al
Patentanwälte Dr. V. Schmied-Kowarzik Dr.
P. Weinhold Dr.-Ing. G. Dannenberg Dr. D.
Gudel Dipl.-Ing. S. Schubert Dr. P. Barz
Grosse Eschenheimer Strasse 39
D-6000 Frankfurt am Main 1(DE)

(54) **Abtrennung von Schwermetallen und organischen Substanzen von Inertstoffen in nicht-wässriger Phase.**

(57) Gleichzeitige Abtrennung von Schwermetallen und organischen Substanzen von Inertstoffen durch Behandeln mit Acetanhydrid.

EP 0 396 887 A1

## Abtrennung von Schwermetallen und organischen Substanzen von /Inertstoffen in nicht-wäßriger Phase

Neben Inertstoffen wie Sand, Humus, Ziegelbruch, Kies und Holz enthalten verunreinigte Erden, Schlämme und Stäube oft Schwermetalle, deren Salze oder Oxide. Es ist bekannt, aus diesen Erden oder Schlämmen durch Behandlung mit wäßrigen, verdünnten anorganischen oder organischen Säuren Schwermetalle herauszulösen.

Bei solchen Laugungen liegt der Wasseranteil der verwendeten Säurelösungen zwischen 95 % bis herunter zu 20 %. Der Wasseranteil ist aber ein Ballast, welcher zum Erhalt der oft gewünschten wasserfreien Metallsalze entfernt werden muß. Ferner fürht dieser Wasseranteil zum Beispiel bei Verwendung von wäßriger Essigsäure oder anderen organischen Säuren zur Bildung schlammiger oder schleimiger Produkte und Rückstände. Diese entstehen aus dem Ölanteil der verschmutzten Erden oder Schlämme.

Hierdurch wird die Abtrennung der gebildeten Metallsalze in Form von Acetaten erschwert. Außerdem sind diese Metallsalze durch Ölschlamm verunreinigt und müssen in einem nachgeschalteten Reinigungsprozeß zwecks einer weiteren Verwendung im Sinne des Recycling verwendbar gemacht werden.

Um das Ziel der Erfindung zu erreichen, Öle und Schwermetalle gleichzeitig und in einer derartigen Form abzuscheiden, daß sie sich ohne gegenseitige Störung voneinander trennen lassen, ist die Anwesenheit von Wasser in dem zu behandelnden Material auszuschließen.

Selbstverständlich ist dies in an sich bekannter Weise durch Abpressen oder Verdampfen möglich, dies schließt aber nicht aus, daß geringe Mengen, z.B. 1 bis 2 % von Feuchte im Material verblieben sind. Diese Restmengen an Wasser müssen entfernt werden.

Eine vollkommene Entfernung der ölartigen, organischen Inhaltsstoffe aus den Erden oder Schlämmen wird sonst nicht erreicht.

Erfindungsgemäß wird die vollkommene Entfernung von Öl und Schwermetallen dadurch erreicht, daß Wasser vollkommen ausgeschlossen wird und in absolut nicht-wäßriger Phase gearbeitet wird.

Es wurde nun gefunden, daß Acetanhydrid als nicht-wäßrige Phase zur gleichzeitigen Entfernung von Ölen und auch von Schwermetallen mit Vorteil verwendet werden kann. Es wirkt nämlich Acetanhydrid einmal als Akzeptor für Wasser und vorhandene Feuchtigkeit im zu behandelnden Material, wie beispielsweise Erdaushub aus Böden von Kokereigeländen. Andererseits löst es organische Stoffe, wie Öle und auch Schwermetalle und deren Salze.

Durch den Siedepunkt des Acetanhydrids von 139 ° C ist es möglich, bei erhöhten Temperaturen zu arbeiten, wobei aus dem Anhydrid unter Wasseraufnahme entstandene Essigsäure oder Essigsäure/Wasser-Mischungen bei maximal bis 118 ° C verdampfen können und an sich nicht an der Reaktion teilnehmen.

Zur Erläuterung der Durchführung des Verfahrens wird folgendes Beispiel angeführt, ohne jedoch die Erfindung darauf zu beschränken.

Beispiel

1000 g von Kies und Ziegelbruch gereinigtem Erdreich eines Kokereigeländes werden in einen 1 Liter Rundkolben gegeben. Das Erdreich hatte ein Feuchte von 10 %. Es war stark mit Öl durchtränkt und enthielt kleine Koksstücke. Zu dem eingefüllten Erdreich wurden 800 ml Acetanhydrid zugegeben. Die Mischung wurde auf 120 ° bis zu 130 ° C zum Sieden erhitzt.

In einer Falle, hinter absteigendem Kühler, wurden etwa 90 ml einer glasklaren Flüssigkeit kondensiert, welche sich bei Prüfung als wäßrige Essigsäure erwies.

Nach einer Kochzeit von 20 Minuten und Abkühlung auf 25 ° C wurde der Kolbeninhalt abfiltriert. Das Filtrat war tiefdunkelbraun. Zu einer Probe des Filtrates wurde eine wäßrige Säurelösung und ein wasserunlösliches organisches Lösemittel, nämlich Trichlorethylen gegeben.

Nach Umschütteln der Mischung bildeen sich zwei Schichten, eine übersehende, milchige wäßrige Phase und eine bodenständige, dunkelbraune ölige Phase. Diese beiden Phasen wurden getrennt. Bei der Untersuchung wurde durch alkalische Einstellung der wäßrigen Phase eine Fällung erhalten, welche einen Anteil von 14 % Schwermetallen aus dem behandelten Material enthielt. Die ölige Phase ergab nach Abdampfen des Lösemittels ein dunkles, bei Normaltemperatur erstarrendes Öl, welches brennbar war und ohne Rückstände verbrannte.

Der bei der Filtration verbliebene Rückstand bestand aus Sandkörnern, Holz und Ziegelsplitt.

Allgemein ist für die Ausübung des Verfahrens zu sagen, daß sich die Menge des verwendeten Acetanhydrids nach dem Feuchtegehalt des zu behandelnden Materials sowie nach der Menge der Metalle und der organischen Stoffe richtet. Es ist dabei selbstverständlich, daß durch eine vorhergehende Trocknung des Materials der Feuchtegehalt weitgehend reduziert wird.

**Ansprüche**

1. Verfahren zur Abtrennung von Schwermetallen und organischen Substanzen von wasserhaltigen Inertstoffen durch Mischen der Inertstoffe mit Acetanhydrid, Abdestillieren der gebildeten Essigsäure oder Essigsäure-Wassermischung bis zu einer Destillationstemperatur von 118° C und Abtrennen des restlichen Acetanhydrids von den Inertstoffen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 291 746 (E. DUMONT)<br>* Anspruch 1 *<br>--- | 1 | C 22 B 3/16<br>B 09 B 5/00 |
| A | EP-A-0 161 698 (WEGENBOUWMAATSCHAPPIJ)<br>* Anspruch 1 *<br>--- | 1 | |
| A | EP-A-0 278 282 (ACCUMULATORENFABRIK SONNENSCHEIN)<br>--- | | |
| A | FR-A-2 608 628 (PROJECTBUREAU VOOR INDUSTRIEEL AFVAL)<br>--- | | |
| A | O.A. NEUMÜLLER: "Römpps Chemie-Lexikon" 7. Auflage, 1973, Seite 1051, Frankh'sche Verlagshandlung, Stuttgart, DE * Essigsäureanhydrid *<br>----- | | |

| | |
|---|---|
| | **RECHERCHIERTE SACHGEBIETE (Int. Cl.5)**<br><br>C 22 B 3/16<br>B 09 B 5/00 |

Der vorliegende Recherchenbericht wurde für alle Patentansprüche erstellt

| Recherchenort | Abschlußdatum der Recherche | Prüfer |
|---|---|---|
| BERLIN | 25-07-1990 | SUTOR W |